# EUROPEAN PATENT SPECIFICATION

(11) **EP 0 955 774 B1**
(45) Date of publication and mention of the grant of the patent: **07.11.2007**
(21) Application number: 99303439.6
(22) Date of filing: 30.04.1999
(51) Int. Cl.: H04N 7/00, H04N 5/00

(54) **Method of creating a device page upon connecting a device which does not support a predetermined protocol to home network**
Verfahren zum Erzeugen einer Geräteseite beim Verbinden eines Gerätes mit einem Hausnetzwerk, das ein vorgegebenes Protokoll nicht unterstützt
Procédé de création d'une page de dispositif lors d'un raccordement d'un dispositif à un réseau domestiquene supportant pas les protocoles prédéterminés

(30) Priority: 06.05.1998 KR 9816143
(43) Date of publication of application: 10.11.1999
(73) Proprietor: SAMSUNG ELECTRONICS CO., LTD., Suwon-City, Kyungki-do (KR)
(72) Inventor: Na, Ii-ju, Dongjak-gu, Seoul (KR)
(74) Representative: Robinson, Ian Michael

(56) References cited:
- WO-A-97/18636
- PEISEL B: "DESIGNING THE NEXT STEP IN INTERNET APPLIANCES" 23 March 1998 (1998-03-23) , ELECTRONIC DESIGN, PENTON PUBLISHING, CLEVELAND, OH, US, VOL. 46, NR. 7, PAGE(S) 50,52,56 XP000780455 ISSN: 0013-4872 * the whole document *
- CORCORAN P M ET AL: "BROWSER-STYLE INTERFACES TO A HOME AUTOMATION NETWORK" November 1997 (1997-11) , IEEE TRANSACTIONS ON CONSUMER ELECTRONICS, IEEE INC. NEW YORK, US, VOL. 43, NR. 4, PAGE(S) 1063-1069 XP000768559 ISSN: 0098-3063 * the whole document *
- WILLIAMS T: "TOOLS AND PROTOCOLS LINK EMBEDDED SYSTEMS OVER THE INTERNET" 18 August 1997 (1997-08-18) , ELECTRONIC DESIGN, PENTON PUBLISHING, CLEVELAND, OH, US, VOL. 45, NR. 17, PAGE(S) 91-92,96,98 XP000733504 ISSN: 0013-4872 * the whole document *
- DESBONNET J ET AL: "SYSTEM ARCHITECTURE AND IMPLEMENTATION OF A CEBUS/INTERNET GATEWAY" November 1997 (1997-11) , IEEE TRANSACTIONS ON CONSUMER ELECTRONICS, IEEE INC. NEW YORK, US, VOL. 43, NR. 4, PAGE(S) 1057-1062 XP000768558 ISSN: 0098-3063 * the whole document *
- LAWTON G: "DAWN OF THE INTERNET APPLIANCE" October 1997 (1997-10) , COMPUTER, IEEE COMPUTER SOCIETY, LONG BEACH., CA, US, US, VOL. 30, NR. 10, PAGE(S) 16,18 XP000738076 ISSN: 0018-9162 * the whole document *

## Description

The present invention relates to a home network, and more particularly, to a method of creating a device page when connecting a device which does not support a predetermined protocol to a home network.

Recently, there are various digital devices such as a digital TV(DTV), a digital video camera (DVC), a digital video disk player (DVDP), a digital set top box, etc. The IEEE1394 standard approved by the IEEE committee is attracting attention as a digital network interface to establish a home network with these devices. Generally, every home appliance provides a method of allowing a user to control its various functions such as by using control buttons or a remote controller.

Control between devices meeting the IEEE1394 standard is made by using control commands. The most representative control command is an AV/Control Command and Transaction Set (AV/C CTS). For such inter-device control, the functions of each device are defined by hexadecimal codes. For example, the play command for a VCR is defined as "OxC8".

In a digitized home network system using the IEEE1394 network, inter-device control will be made by organizing one device, being the subject of control, as a control device and a plurality of devices, being targets of control, as object devices. This type of home network system has the following defects. First, the single control device must know all the command sets of the object devices, which causes a considerable software and hardware burden. Second, the control device does not know commands other than commands included at the time when the product is manufactured. Thus, it does not have a method of controlling new object devices. Third, it is not easy to provide a graphical user interface (GUI). That is, it is difficult to basically define unified GUI which can be applied to all kinds of devices, and also there is a limit in defining the GUIs by groups of products.

A method, to remove a spacial restriction in manipulating various devices and effectively display a variety of information by adopting web servers in devices adopting the IEEE1394, has been studied as a method of solving the above problem. Here, an IEEE1394 device having a display device such as DTV or PC includes a web browser, so it will be easier to control the IEEE1394 device including a web server when a device page is made. In this state, when a device, not supporting the Internet protocol (IP), or a device, supporting only the IP not specific protocols defined by a home network manufacturer, has been connected to a home network, a method for treating the device must first be prepared.

In "Designing The Next Step In Internet Appliances" by B. Peisel (23 March 1998, Electronic Design, Penton Publishing, Cleveland, OH, US, Vol. 46, Nr. 7, pages 50, 52 and 56), web-enabled information appliances are disclosed. This document teaches embedding an HTTP server in devices such as printers, to enable HTML screens to display information that can be viewed through a standard web-browser. This document forms the pre-characterising portion of independent claim 1 appended hereto.

In "browser-styled interfaces to a home automation network" by Peter M Corcoran (November 1997, 1997-11, IEEE transactions on consumer electronics, IEEE Inc. New York, US, volume 43, number 4, pages 1063 - 1069 XP000768559, ISSN: 0098-3063) there is described the design and implementation of a browser-style interface to a home automation network. The interface supports browsing and navigation of network devices and context structures and the user can interact with individual devices on the network, and access and control context and object structures within these devices. The interface can be used to access a local home automation network from a standard desktop PC, or from a TV/set top box system.
Williams T: "tools and protocols link embedded systems over the internet" (18 August 1997, 1997-08-18, electronic design, Penton Publishing, Cleveland, Ohio, US, volume 45, number 17, pages 91 - 92, 96, 98, XP000733504, ISSN: 0013-4872) discusses embedded systems and embedded internet devices. In one system EMIT (embedded micro-interface Technology) micro tags are discussed, and the manner in which a client-resident emManager can recognise each micro tags id and associate with an emObject, which then blossoms into the elements the user interface that displays data and can be manipulated for control.

With a view to solve or reduce the above problem, it is an aim of embodiments of the present invention to provide a method of creating a device page which allows a user to discriminate devices not supporting a predetermined protocol, and which supports the user to appropriately deal with the devices, when the devices not supporting predetermined protocols are connected to a home network. According to a first aspect of the invention, there is provided a device page creating method using a web browser in a client device, in a home network such as an IEEE 1394 network to which a client device and a plurality of server devices are connected, the method comprising the step of: creating a device page for displaying the plurality of devices, by arranging the addresses on the web browser; characterised by, before the step of creating a device page, carrying out the steps of: determining whether the plurality of devices are devices which support Internet protocol and an application protocol required by the client device, respectively, by accessing a file or register in each of the plurality of devices; and obtaining and receiving a corresponding Internet protocol address through a process for receiving a predetermined Internet protocol address, if each of the accessed devices is a device which supports the desired protocols, and receiving an address determined by the client device if each of the accessed devices is a device which does not support the desired protocols.

Preferably, when the created device page is displayed on the web browser, devices having Internet protocol addresses are displayed as unique icons, and devices not supporting the desired protocols are displayed as default icons possessed by the client device.

Preferably, the user selects the default icons, the client device provides to the user the prepared web page of the device not supporting the desired protocols, and allows the user to control the device in an existing control command manner.

Preferably, when the user selects the default icon, a message informs the user that a device having the default icon cannot be used, if the client device does not have the web page of the device not supporting the desired protocols.

For a better understanding of the invention, and to show how embodiments of the same may be carried into effect, reference will now be made, by way of example, to the accompanying diagrammatic drawings, in which:
Figure 1 is a schematic block diagram illustrating a home network environment;
Figure 2 illustrates an example of a protocol stack of a device operating as a web server;
Figure 3 is a flowchart illustrating a method of creating a device page, according to the present invention; and
Figure 4 illustrates an example of a device page shown according to a device page creating method according to an embodiment of the present invention.

A digitized home network environment comprised of IEEE1394 apparatuses, and the protocol stack of a device including a web server, will first be described in brief.

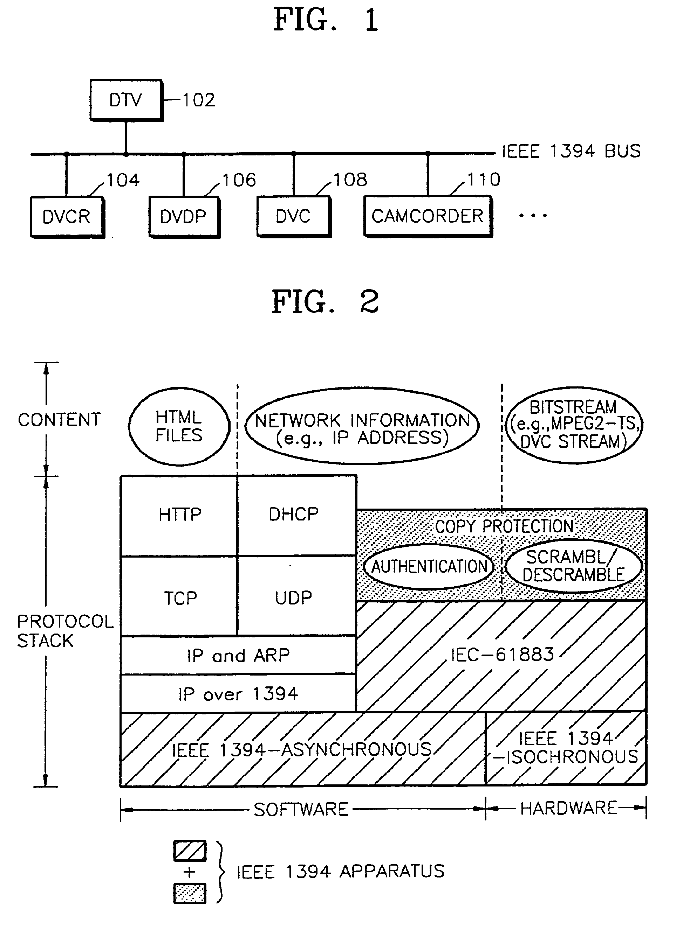

Figure 1 is a schematic block diagram illustrating a home network environment.

Referring to Figure 1, a DTV 102, a DVCR 104, a DVDP 106, a DVC 108, a camcorder 110, etc. are connected to each other via an IEEE 1394 bus, to form a home network system. Here, the DTV 102 (or another device including a display device such as a PC) includes a web browser and operates as a client device, and the DVCR 104, the DVDP 106, and the DVC 108 each include a web server and operate as a server device.

Figure 2 illustrates an example of the protocol stack of a device including a web server. Referring to Figure 2, an IEEE 1394 apparatus includes hatched layers. Here, the portions hatched in one direction are fundamentally included in the IEEE1394 apparatus, but the portion hatched in two directions may or may not be included in the IEEE1394 apparatus. The IEEE1394 apparatus can operate as a web server on the Internet by stacking an IP over the IEEE 1394 layer, an IP and address resolution protocol (ARP) layer, and a transmission control protocol (TCP) layer and a user datagram protocol (UDP) layer as one layer on the IEEE 1394 apparatus. The IEEE1394 apparatus operates as a hypertext transfer protocol (HTTP) server, i.e., a web server, and has hypertext markup language (HTML) text hierarchy in which its own functions are depicted. A user can control devices by calling the web pages from devices including web servers using a web browser included in a client device.

Referring back to Figure 1, the DTV 102 being a client device makes a device page for displaying all server devices connected to a home network whenever there is a state change caused by a bus reset including powering on of a device. Each of the server devices has a unique bitmap file or unique icon file which represents the device itself. These files can be used for a client device having a web browser to make a device page which can obviously display devices connected to a current IEEE1394 network. Here, each icon, shown through the web browser on the screen of the client device, is connected to the uppermost level HTML page of each of the server devices according to a created device page.

The respective unique IP addresses for all the devices connected to the home network are called, and the unique icon files for all the devices are finally read from the addresses, thereby producing the device page. Here, the client device and the server devices must support both the Internet protocol (IP) and a specific protocol defined by a home network manufacturer, so that the client device can receive the icon files from each of the server devices. That is, referring to Figure 2, the client device and the server devices must support the IP and the HTTP.

However, for example, if the camcorder 110, connected to the home network via the IEEE1394 bus, as shown in Figure 1, satisfies only the IEEE1394 standard and does not have a web server, it will be difficult to display the camcorder 110 as an icon when the client device creates a device page using a web browser. Also, if the camcorder 110 does not support the specific protocol defined by the home network manufacturer even though it includes a web server, it also will be difficult to display the camcorder 110 as an icon.

A device page creating method according to aspects of the present invention to address the above problems will now be described as follows.

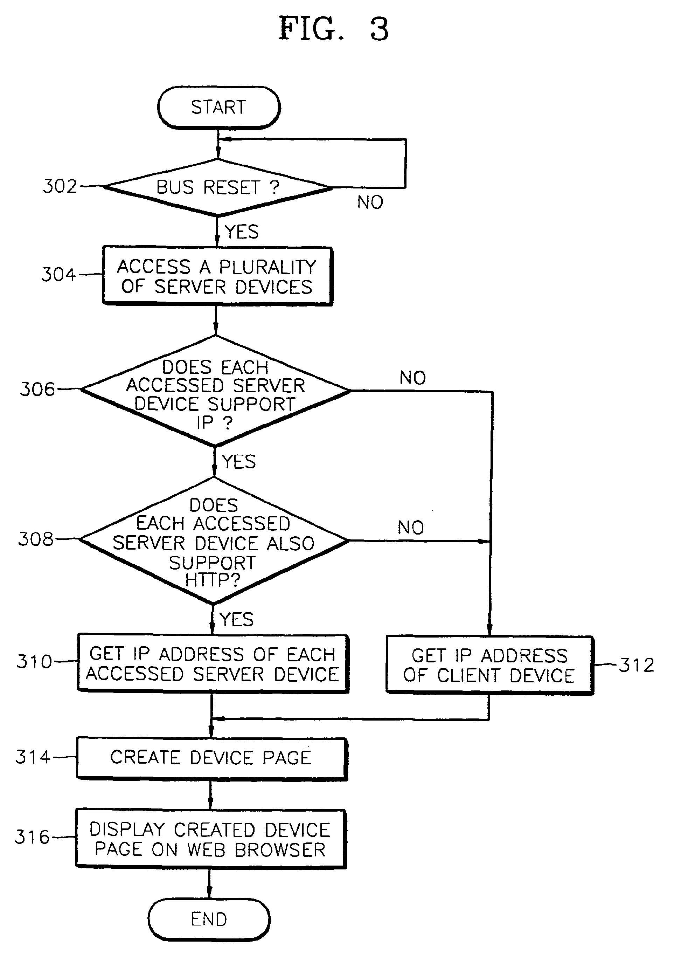

Figure 3 is a flowchart illustrating a method of creating a device page according to the present invention. Since the device page is produced whenever the bus is reset, first, a determination of whether a bus is reset is made in step 302. Upon detection of a bus reset, a client device (DTV 102 of Figure 1) having a web browser enters into the step of producing the device page. A plurality of server devices, connected to a home network, are accessed to obtain their IP addresses, in step 304. Typically, the device page obtains the IP addresses of the server devices through a process of receiving predetermined IP addresses. The web browser reads an icon file, e.g., "icon.gif", from each of the IP addresses, allowing a user to recognize icons. However, when a device not supporting the IP and HTTP is detected, a separate treatment process is required.

Thus, after the step 304, a plurality of server devices are accessed to determine whether the devices support the IP, in step 306. A determination of whether the accessed server devices observe the IP over the 1394 standard can be made by reading a network channel register (NCR), i.e., by performing an asynchronous reading transaction. After the step 306 is satisfied, it is determined whether each of the accessed server devices supports the HTTP, in step 308. Here, the determination of whether the accessed server devices support the HTTP can be made, for example, by reading a predetermined register pre-defined in a control and status register (CSR) area to discriminate a device satisfying a protocol desired by a home network manufacturer. Alternatively, this determination can be made by demanding a specific file (e.g., an attribute file) from each of the server devices via the HTTP and then checking the response of the server devices.

After the step 308 is satisfied, the IP addresses of the accessed server devices are obtained through the process for receiving a predetermined IP address, since each of the accessed server devices supports the desired protocols, in step 310. For example, the IP address can be obtained from the accessed server devices, or can be pre-allocated in the client device. Alternatively, new addresses can be allocated. Meanwhile, as for server devices not supporting the IP and those not supporting the HTTP, the client device obtains its IP addresses, in step 312. That is, the addresses set by the client device are obtained. After step 310 or 312, the web browser produces a device page for displaying a plurality of server devices, by arranging the obtained addresses, in step 314.

A programmer having programmed a web browser shows the produced device page on the web browser at a predetermined condition time, in step 316. Here, server devices having unique IP addresses are displayed as unique icons obtained by the addresses, but devices having no unique IP addresses are displayed as default icons possessed by the client device.

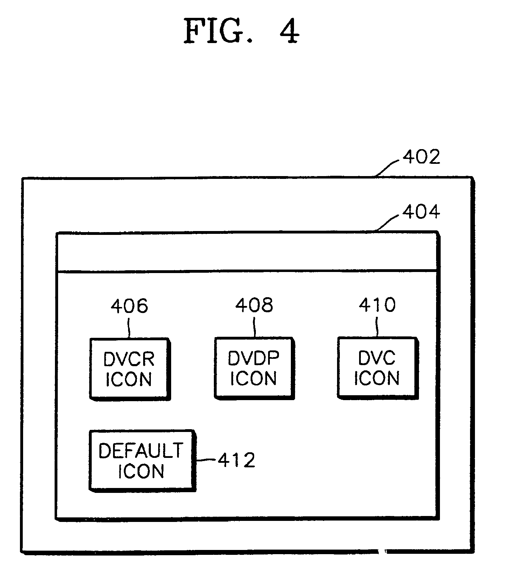

Figure 4 illustrates an example of a device page created by a device page creating method according to the present invention. Referring to Figure 4, a web browser screen 404 is shown on a display screen 402 of a DTV operating as a client device, and icons 406, 408 and 410 of a plurality of server devices connected to a home network are shown according to a device page. If the camcorder 110 of Figure 1 does not support the IP, it is displayed as a default icon 412 prepared in the client device as shown in Figure 4, and treated as an unknown device.

If a user selects the DVCR icon 406, the web browser is connected to the uppermost level HTML page of a DVCR having a web server, and reads the content from the page. However, if the user selects the default icon 412, the web browser is connected to its default page, i.e., its web page, and displays the content of the default page. That is, information on the unknown device to be displayed on a device page is possessed by the client device. If the client device does not have the display information, i.e., web page, a message will inform the user that the device having the default icon cannot be used.

In the case of devices which can be recognized by the client device because of their pre-stored display information, the client device provides a control command usage by means of a remote controller to the default page so that a user can control the basic functions of the devices by executing control commands such as an existing AV/C CTS.

Meanwhile, the above-described embodiment of the present invention can be written by a program which can be executed by a computer. Also, the embodiment can be accomplished in a general purpose digital computer which operates the program from a media used in the computer. The media can include storage media such as a magnetic storage medium (e.g., a ROM, a floppy disk, a hard disk, etc.), an optical reading medium (e.g., a CD-ROM, a DVD, etc.), and a carrier wave (e.g., transmission through Internet).

The recording medium stores program codes for allowing some steps to be performed in a computer. These steps are: determining whether a plurality of devices are devices which support protocols required by a client device, by accessing the plurality of devices; obtaining corresponding IP addresses through a process for receiving a predetermined IP address, if each of the accessed devices is a device which supports the desired protocols, and obtaining an address set by the client device if each of the accessed devices is a device which does not support the desired protocols; and creating a device page for displaying the plurality of devices, by arranging the addresses on a web browser. The program is coded so as to determine whether the accessed device is a device which supports the IP, by reading the network channel register of the accessed device, as in the determination step, and to make another determination of whether the accessed device is a device which supports a protocol defined by a home network manufacturer, by reading a pre-defined specific register, if the accessed device is the device which supports the IP.

Functional programs, codes, and code segments for accomplishing the present invention can be easily inferred by programmers skilled in the art to which the present invention pertains.

In the device page creating method according to embodiments of the present invention as described above, when a device not supporting predetermined protocols is connected to a home network, a device not supporting predetermined protocols is determined, to thus allow a user to discriminate such a device and to support the user to appropriately cope with the unsupported device.

Although a few preferred embodiments have been shown and described, it will be appreciated by those skilled in the art that various changes and modifications might be made without departing from the scope of the invention, as defined in the appended claims.

## Claims

1. A device page creating method using a web browser in a client device (102), in a home network such as an IEEE 1394 network to which a client device (102) and a plurality of server devices (104,106,108,110) are connected, the method comprising the step of:
creating (step 314) a device page (404) for displaying the plurality of devices (104,106,108,110), by arranging the addresses on the web browser (step 316);
**characterised by**, before the step of creating a device page (step 314), carrying out the steps of:
determining (steps 306,308) whether the plurality of devices (104,106,108,110) are devices which support Internet protocol (306) and a specific Internet application protocol required by the client (308) required by the client device (102), respectively, by accessing a file or register in each of the plurality of devices (104,106,108,110); and
obtaining and receiving a corresponding Internet protocol address through a process for receiving a predetermined Internet protocol address, if each of the accessed devices is a device which supports said desired Internet protocols (step 314), and receiving an address determined by the client device if each of the accessed devices is a device which does not supports said desired Internet Protocols (step 312).

2. The device page creating method in a home network as claimed in claim 1, wherein when the created device page is displayed on the web browser, devices having Internet protocol addresses are displayed as unique icons (406,408,410), and devices not supporting the desired Internet protocols are displayed as default icons (412) possessed by the client device.

3. The device page creating method in a home network as claimed in claim 2, wherein when the user selects the default icons (412), the client device (102) provides to the user the prepared web page of the device (110) not supporting the desired Internet protocols, and allows the user control the device (110) in an existing control command manner.

4. The device page creating method in a home network as claimed in claim 2 or 3, wherein when the user selects the default icon (412), a message informs the user that a device (110) having the default icon (412) cannot be used, if the client device (102) does not have the web page of the device (110) not supporting the desired Internet protocols.

## Patentansprüche

1. Verfahren zum Erzeugen einer Geräteseite unter Verwendung eines Web-Browsers in einem Client-Gerät (102) in einem Hausnetzwerk, wie beispielsweise einem IEEE-1394-Netzwerk, an das ein Client-Gerät (102) und eine Vielzahl von Server-Geräten (104, 106, 108, 110) angeschlossen sind, wobei das Verfahren die folgenden Schritte umfasst:
Erzeugen (Schritt 314) einer Geräteseite (404) zum Anzeigen der Vielzahl von Geräten (104, 106, 108, 110) durch Anordnen der Adressen auf dem Web-Browser (Schritt 316);
**gekennzeichnet**, vor dem Schritt des Erzeugen einer Geräteseite (Schritt 314), durch das Ausführen folgender Schritte:
Ermitteln (Schritt 306, 308), ob die Vielzahl von Geräten (104, 106, 108, 110) Geräte sind, die jeweils Internetprotokoll (306) und ein von dem Client gefordertes spezifisches Internet-Anwendurigsprotokoll (308) unterstützen, das von dem Client-Gerät (102) gefordert wird, indem auf eine Datei oder ein Register in jeder der Vielzahl von Geräten (104, 106, 108, 110) zugegriffen wird; und
Erhalten und Empfangen einer entsprechenden Intemetprotokoll-Adresse durch einen Prozess zum Empfangen einer vorgegebenen Internetprotokoll-Adresse, wenn jedes der Geräte, auf die zugegriffen wird, ein Gerät ist, das die gewünschten Internetprotokolle unterstützt (Schritt 314), und Empfangen einer Adresse, die von dem Client-Gerät ermittelt wurde, wenn jedes der Geräte, auf die zugegriffen wird, ein Gerät ist, das die gewünschten Internetprotokolle nicht unterstützt (Schritt 312).

2. Verfahren zum Erzeugen einer Geräteseite in einem Hausnetzwerk nach Anspruch 1, wobei, wenn die erzeugte Geräteseite auf dem Web-Browser angezeigt wird, Geräte mit Intemetprotokoll-Adressen als eindeutige Symbole (406, 408, 410) angezeigt werden, und Geräte, die die gewünschten Internetprotokolle nicht unterstützen, als Standardsymbole (412) angezeigt werden, über die das Client-Gerät verfügt.

3. Verfahren zum Erzeugen einer Geräteseite in einem Hausnetzwerk nach Anspruch 2, wobei, wenn der Benutzer die Standardsymbole (412) wählt, das Client-Gerät (102) für den Benutzer die vorbereitete Webseite des Geräts (110), das die gewünschten Internetprotokolle nicht unterstützt, bereitstellt und es dem Benutzer gestattet, das Gerät (110) in einer bestehenden Steuerbefehlsweise zu steuern.

4. Verfahren zum Erzeugen einer Geräteseite in einem Hausnetzwerk nach den Ansprüchen 2 oder 3, wobei, wenn der Benutzer die Standardsymbole (412) wählt, eine Nachrichten den Benutzer informiert, dass ein Gerät (110) mit dem Standardsymbol (412) nicht verwendet werden kann, wenn das Client-Gerät (102) die Webseite des Geräts (110), das die gewünschten Internetprotokolle nicht unterstützt, nicht hat.

## Revendications

1. Procédé de création d'une page de dispositif utilisant un navigateur Web dans un dispositif client (102), dans un réseau domestique tel qu'un réseau IEEE 1394 auquel un dispositif client (102) et une pluralité de dispositifs clients (104,106,108,110) sont connectés, le procédé comprenant l'étape de :
création (étape 314) d'une page de dispositif (404) pour l'affichage de la pluralité de dispositifs (104,106,108,110) en disposant les adresses sur le navigateur Web (étape 316) ;
**caractérisé par**, avant l'étape de création d'une page de dispositif (étape 314), l'exécution des étapes de :
détermination (étapes 306,308) si la pluralité de dispositifs (104,106,108,110) sont des dispositifs qui supportent un protocole Internet (306) et un protocole d'application Internet spécifique (308) requis par le dispositif client (102), respectivement, par l'accès à un fichier ou un enregistrement dans chacun de la pluralité de dispositifs (104,106,108,110) ; et
obtention et réception d'une adresse de protocole Internet correspondante par un procédé de réception d'une adresse de protocole Internet prédéterminée, si chacun des dispositifs atteints est un dispositif qui supporte lesdits protocoles Internet voulus (étape 314), et réception d'une adresse déterminée par le dispositif client si chacun des dispositifs atteints est un dispositif qui ne supporte pas lesdits protocoles Internet voulus (étape 312).

2. Procédé de création d'une page de dispositif dans un réseau domestique selon la revendication 1, dans lequel quand la page de dispositif créée s'affiche sur le navigateur Web, les dispositifs ayant des adresses de protocoles Internet s'affichent comme icônes uniques (406,408,410), et les dispositifs qui ne supportent pas les protocoles Internet voulus s'affichent comme icônes par défaut (412) possédées par le dispositif client.

3. Procédé de création d'une page de dispositif dans un réseau domestique selon la revendication 2, dans lequel quand l'utilisateur choisit les icônes par défaut (412), le dispositif client (102) fournit à l'utilisateur la page Web préparée du dispositif (110) ne supportant pas les protocoles Internet voulus, et permet à l'utilisateur de commander le dispositif (110) d'une manière d'ordre de commande existante.

4. Procédé de création d'une page de dispositif dans un réseau domestique selon la revendication 2 ou 3, dans lequel quand l'utilisateur choisit l'icône par défaut (412), un message informe l'utilisateur qu'un dispositif (110) disposant de l'icône par défaut (412) ne peut pas être utilisé si le dispositif client (102) n'a pas la page Web du dispositif (110) ne supportant pas les protocoles Internet voulus.
